# EUROPEAN PATENT APPLICATION

(11) **EP 1 710 262 A1**
(43) Date of publication of application: **11.10.2006**
(21) Application number: 06112081.2
(22) Date of filing: 31.03.2006
(51) Int. Cl.: C08G 18/10, C08G 18/12, C08G 18/38, C08G 18/61, C08G 18/77, C08G 77/458

(54) **Heat-resistant silicone-polyurethane and a process for its synthesis**

(30) Priority: 05.04.2005 HU 0500363
(71) Applicant: Budapest University of Technology and Economics, 1111 Budapest (HU); BERVINA Hajtástechnikai Kft., 1145 Budapest (HU)
(72) Inventor: Nagy, József, 1118, Budapest (HU); Wagner, Ödön, 2040, Budaörs (HU); Kwaysser, Endre, 1108, Budapest (HU); Bereczk, Gábor, 1183, Budapest (HU)
(74) Representative: Strych, Werner Maximilian Josef

(57) **Abstract**

A new type heat-resistant silicone-polyurethane, which contains polysiloxane chain units of the general formula (II) with diisocyanato end groups and with polyurethane bonds in the chain

-OCN-Z-NH-CO-O-X-O-CO-(NH-Z-NH-CO-O-X-O-)ₘ-CO-NH-Z-NCO- (II)

- wherein X is the molecular fragment containing the siloxane chain, Z is the molecular fragment containing the alkyl chain, m is an integer between 1 and 20 - and/or polysiloxane chain units of the general formula (IV) with diisocyanato end groups and with polyurethane bonds in the chain

-OCN-X-NH-CO-O-Z-O-CO-(NH-X-NH-CO-O-Z-O-)ₘ-CO-NH-X-NCO- (IV)

- wherein X is the molecular fragment containing the siloxane chain, Z is the molecular fragment containing the alkyl chain, m is an integer between 1 and 20 - as crossed-linked polymer units and a process for the synthesis of thereof.

## Description

### FIELD OF THE INVENTION

The invention relates to new polysiloxane compounds containing polyurethane bonds, as well as a synthetic process for their production.

### BACKGROUND OF THE INVENTION

It is well known that polyurethanes are widely applied materials. Their widespread usage is based on their favorable mechanical behavior; on the basis of their compatibility with other materials they are widely applicable.

A serious disadvantage of these types of materials, however, is that at higher temperatures their mechanical properties are deteriorating, exhibiting softening and easily deformation.

The aim of the invention is thus, the development such a new type of polyurethane copolymer, which retain their beneficial mechanical properties even at higher temperatures, and are capable for be used even in high-temperature applications.

During our experiments we reached the surprising conclusion that the above aim can be reached when polysiloxanes are being built into new prepolymers and the polyurethane type polymers can be built up from these prepolymers.

Some examples are known already from the literature for the synthesis of polyurethanes containing siloxane units (see e.g. EP. Pat. 1,277,786, US Pat. 6,730,749, US Pat. 6,764,717 patent specifications as well as the US 2004/097682 patent application), these solutions, however, are aimed to modify certain mechanical properties.

### SUMMARY OF THE INVENTION

On the basis of our own experimental work we reached the conclusion that in making the polyurethane heat-resistant, when bis-hydroxy-functionalised dialkyl- or/and diarylpolysiloxanes with a general formula (I) shown below

HO-(CQZ)n -(SiR₂O)ₘ-(CQZ)ₚ-OH (1)

wherein n= 1...20, m= 1...20, p= 1...20 R = substituted or unsubstituted alkyl, aryl or aralkyl group; Q = H, substituted and/or unsubstituted alkyl, aryl or aralkyl group) is reacted with a diisocyanat-compound in the proper proportion, thus synthesizing a prepolimer containing siloxane chain units and diisocyanato end groups.

In accordance with present invention the diisocyanato compound is alkyl, preferably tetramethylene and/or pentamethylene- and/or hexamethylene diisocyanate; aryl - preferably toluidine-diisocyanate isomers; aralkyl, preferably methylene-diphenyl-diisocyanate and/or its differently substituted derivatives; cyclic - preferably isoforon-diisocyanate.

We have found that siloxane-diol with formula (I) and diisocyanate should be reacted in a special proportion, in such a way that the ratio of the diol and the diisocyanat should be n to n+1 (N= 1...20)

The above synthesized compounds with a general formula (II) - which contain polysiloxanes and polyurethane bindings in the chain and has diisocyananto end groups - are new:

OCN-Z-NH-CO-O-X-O-CO-(NH-Z-NH-CO-O-X-O-)ₘ-CO-NH-Z-NCO (II)

wherein X is the molecular fragment containing the siloxane chain, Z- is the molecular fragment containing the alkyl moiety.

### DETAILED DESCRIPTION OF THE INVENTION

On the basis of the above description our invention relates to the new compound with formula (II), which is a compound containing polysiloxane and polyurethane bonds in the chain and has diisocyanato end groups.

OCN-Z-NH-CO-O-X-O-CO-(NH-Z-NH-CO-O-X-O-)ₘ-CO-NH-Z-NCO (II)

- wherein X is the molecular fragment containing siloxane chain, Z is the fragment containing an alkyl group, m is an integer between 1 and 20.
   According to the present invention a further new compound is the formula (IV) which contains polyurethane bonds and polysiloxanes in the chain and diisocyanate end groups;

   OCN-X-NH-CO-O-Z-O-CO-(NH-X-NH-CO-O-Z-O-)ₘ-CO-NH-X-NCO (IV)
- wherein X is the molecular fragment containing the siloxane fragment, Z is the molecular fragment containing the alkyl moiety, m is an integer between 1 and 20.
   A further invention is a new type heat-resistant silicone-polyurethane, which contains a II type block with polyurethane bonds and siloxane chain units with diisocyanato end groups

   OCN-Z-NH-CO-O-X-O-CO-(NH-Z-NH-CO-O-X-O-)ₘ-CO-NH-Z-NCO (II)

   wherein X is the siloxane fragment, Z is the fragment containing the alkyl chain, m is an integer between 1 and 20 as well as compound of (IV) type with polyurethane bonds and/or a siloxane chain units with diisocyanato end groups

   OCN-X-NH-CO-O-Z-O-CO-(NH-X-NI-I-CO-O-Z-O-)ₘ-CO-NI-I-X-NCO (IV)
- wherein X is the molecular fragment containing the siloxan chain, Z is the fragment containing the alkyl segment, m is the integer between 1 and 20.
   A further object of the invention is also the process for the production of the new silicone-polyurethane, which is based on the reaction of the precursor with a general formula (I) below:

   HO-(CQZ)n ―(SiR₂O)ₘ-(CQZ)ₚ-OH (I)
- wherein n= 1....20, m= 1...20, p= 1...20; R =substituted or unsubstituted alkyl, aryl or aralkyl group, Q= H, substituted or unsubstituted alkyl, aryl and/or aralkyl group, Z = H, substituted or/and unsubstituted alkyl, aryl or aralkyl group- with an alkyl or/and aryl diisocyanate or/and with an aralkyl diisocyanate preferably in an n : n+1 ratio, followed by the polymerisation of the precursor synthesized itself or with a diisocyanat containing either a polyether or a polyesther having diisocyanato end groups in different ratio preferably between 20 and 80 w/w %.
   In a preferred embodiment of the invention the olygomers containing diisocyanato end groups are cross-linked by secondary and/or tertiary amines, preferably with bis-amino-phenyl methane bearing either substituted or unsubstituted aromatic ring and/or alkyl moiety, or by bis-aminophenyl-silane.
   The cross-linking should be carried out at high temperature, preferably in a temperature range 70-160 °C degree according to the invention.
   A possible realization of the invention is when the oligomer containing OCN end groups (hereafter OCN-(prep)-NCO) will be applied as prepolimer on its own or/and as a combination with other oligomers containing isocyanato groups, preferably in a 20-80 w/w % ratio. This prepolimer can be cross-linked by diols, preferably with α,ω-diols containing 4-8-methylene groups, and/or polydimethyl-siloxane α,ω-diols, and/or polyols containing polyesther linkages preferably in 20-75% ratio.
   The cross-linking agent can be used in the process according to the invention as aromatic or alifatic di or polyamino compounds at a proper temperature (preferably between 50-140 °C). The duration of the cross-linking is between 3-16 hours, followed by a 1-5 hour heat treatment at 140-160 °C.
   In an other preferred embodiments of the process according to invention the dialkyl (or diaryl)polysiloxane functionalized by bis-isocyanate (with a general formula III)

   OCN-(CQZ)ₙ-(SiR₂O)ₘ-(CQZ)ₚ-NCO (III)
- wherein N= 1....20, m=1...20, p=1....20, R is a substituted or unsubstituted alkyl, aryl or aralkyl group; Q=H, substituted or unsubstituted alkyl, aryl or aralkyl group; Z=H, substituted or unsubstituted alkyl, aryl or aralkyl group - is reacted with diols containing the proper amount of OH groups, thus forming a prepolimer with diisocyanato end groups and siloxane chain units.

In this process the alkyl α,ω-diols preferably with 2-8 methylene units (substituted and/or unsubstituted) and /or 2-30 siloxane-units, at the terminal Si atoms bis-hydroxyalkyl (preferably bis-hydroxy-propyl) groups at the Si atoms alkyl, preferably methyl, aryl and preferably unsubstituted or/and substituted phenyl moieties are applied. The siloxane-diol and the isocyanate are reacted in n : n+1 ratio, where n = 1 ... 20.

The compound synthesized is a polisiloxane containing poliurethane bonds in the chain and diisocyanate end groups with the following general formula (IV):

OCN-X-NH-CO-O-Z-O-CO-(NH-X-NH-CO-O-Z-O-)ₘ-CO-NH-X-NCO (IV)

wherein fragment X contains the siloxane chain and fragment Z contains the alkyl chain.

The isocyanato capped oligomer synthesized above (hereafter OCN-(prep₂)-NCO) will be applied as prepolimer either without additives or mixed by other isocyanato-capped oligomers in 20-80% ratio.

OCN-(prep2)-NCO will be cross-linked by diols, preferably with α,ω-diols with 4-8 methylene units and /or polydimethylsiloxane- α,ω-diols, and/or polyoles containing either polyether or polyesther linkage containing polyols or trioles are mixed preferably in a 20-75% ratio.

As the present scientific knowledge stands, cross linking agent can preferably be alifatic and/or aromatic di or polyamino compounds and/or their mixture at a proper temperature (preferably between 50-140 °C). The duration of the cross-linking is between 3-16 hours, followed by a 1-5 hour heat treatment at 140-160 °C.

In a further variant of the procedure the OCN-(prep)-NCO oligomer is applied as a prepolimer mixed either with OCN-(prep₂)-NCO or with other isocyanato-end-capped oligomers in a 20-80% ratio. The prepolimer obtained this way is cross-linked with dioles, preferably with α,ω-diols preferably with 4-8 methylene units and/or polydimethyl-siloxane- α,ω-diols, and/or polyether, or polyesther chain containing polyols or triols in a proper ratio, preferably in a 20-75% ratio. As a cross linking agent aliphatic or aromatic di and polyamino compounds and/or their mixture can be used at a proper temperature, preferably between 50-140 °C. The duration of the cross-linking is 3-16 hours, the product obtained should be tempered at 140-160 °C for 1-5 hours.

The polymer obtained by the present process is elastic, with good mechanical properties, its hardness can be varied in a vide range (70-100 ShA) depending on its composition.

A detailed description of the invention is provided in the examples presented below. These examples, however, do not restrict the rights of the applicants to the examples (compositions, reaction circumstances etc.) provided below. Unless otherwise stated % is mass (w/w) %. The yields in the production are near to 100%, small losses are attributed to the technologically necessary transportation of the materials (refilling of containers etc.).

### EXAMPLES

### Example 1

30.0 g (0.12 mol) bis-hydroxypropyl-tetramethyl-disiloxane and 30.2 g (0.18 mol) hexamethylene-diisocyanate is reacted under nitrogen atmosphere in a three-nacked flask, equipped with a stirrer at 130 °C for 5 hours. During the reaction gas evolution can be observed, and the completeness of the procedure can be monitored by the cease of the gas formation. The prepolimer thus obtained is to be mixed with N,N'-methylene-bis(3-chloro-2,6-diethyl-aniline) in a 1:0.435 ratio (by weight) at 70 °C. The mixture obtained is treated *in vacuum* in order to remove the gas bubbles formed, and is cross-linked at 120 °C in the proper form. A follow-up tempering at 165 °C is then carried out for 4 hours.

The silicone-polyurethane thus obtained has a hardness of 94-97 ShA, and a tensile strength of 24-27 MPa.

### Example 2

67.2 g (0.4 mol) hexamethylene-diisocyanate and 75.0 g (0.3 mol) bis-hydroxypropyl-octamethyl-tetrasiloxane is reacted as described in the Example 1. The material produced this way is mixed with an equal weight of toluidine-diisocyanate end-capped polyether, which has been obtained from the polymerisation of 1,4-butane-diol, contains 20 butoxy units and contains 4.2% isocyanato groups. The prepolymer obtained this way is mixed in a 1 : 0.218 ratio with N,N'-methylene-bis-(3-chloro-2,6-diethyl-aniline) at 70 °C, followed by debubbling *in vacuum,* and cross linking in a proper form at 120 °C. A consecutive treatment follows at 150 °C and 4 hours.

The polymer thus obtained has a hardness of 94-96 ShA and a tensile strength of 18-21 MPa.

### Example 3

0.056 mol (58.9 g) bis-hydroxypropyl-hexaphenyl-decamethyl-octasiloxane, 0.044 mol (19.0 g) polyether-polyol (M=430 g/mol, containing secondary-alcohole units only), 0,011 mol (22.1 g) polypropylene-glycol-ether based diol (with a molecular weight of 2000 g/mol) and 59,1 g (0,266 mol) diisoforon-diisocyanate are reacted under nitrogen atmosphere in a three-necked reaction vessel equipped with a stirrer for 8 hours and 110 °C than at 130 °C for 2 hours. The material thus obtained is mixed with 0.153 mol (5.78 g) N,N'-methylene-bis-(3-chloro-2,6-diethyl-aniline) at 70 °C, followed by de-bubbling *in vacuum* and cross-linking at 120 °C in a proper form. A treatment follows at 150 °C for 4 hours.

The polymer thus obtained has a hardness of 96-98 ShA and a tensile strength of 20-23 MPa.

### Example 4

0.3 mol (113.4 g)bis-isocyanato-propyl-octamethyl-tetrasiloxan and 0,2 mol (23.6 g) 1,6-hexamethylene-diol is reacted as described in Example 1. The prepolymer thus obtained is mixed with 0.05 mol (12,1 g) bis-4,4'amino-phenyldimethyl-silaneat 60 °C. The mixture is then degassed *in vacuum* and cross-linked at 110 °C in a proper form. The resulting product is cured for 3 hours at 160 °C.

The polymer thus obtained has a hardness of 93-96 ShA and a tensile strength of 20-22 MPa.

### Reference Example 1

### General procedure for production of polyurethane (for comparative purposes)

Using 100 g of toluidine-diisocyanate and end-capped polyether with 20 buthoxy units made from the polymerisation of 1,4-butane-diol with an isocyanate content of 4.2% (TT-142 Baulé SA, France) is warmed up to 70 °C and is mixed with 4,4'-methylene-bis(2-chloramine). The resulting mixture is de-gassed , and cross-linked in a proper form for 30 minutes. A follow-up curing is carried out at 100 °C for 24 hours.

The polymer thus obtained has a hardness of 92-94 ShA and a tensile strength of 33-40 MPa.

### Example 5

### Exhibiting the thermic behavior:

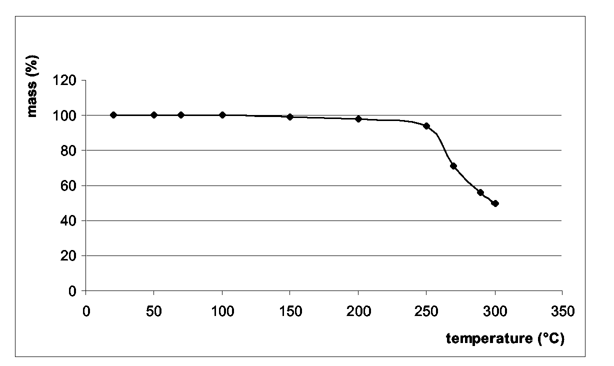

The observed changes in the mass as a function of the temperature. for the silicone-polyurethane polymer obtained in Example 1.

### Example 6

### Exhibiting the thermic behavior

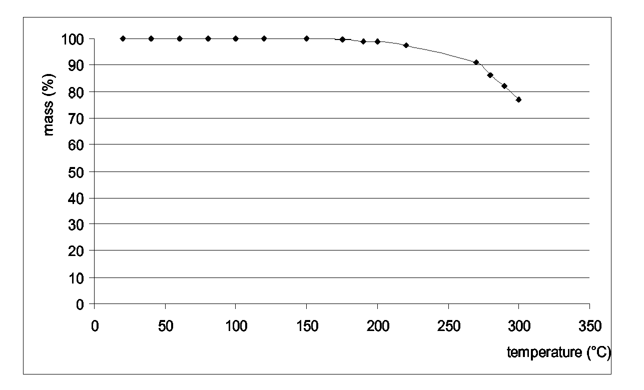

The observed changes in the mass as a function of the temperature. for the material obtained in Example 3.

### Example 6

### Examples exhibiting the mechanical behavior:

| Temperature (°C) | Hardness (Baule polyurethane) (ShA) | Hardness Polymer obtained in Example 1 | Hardness Polymer obtained in Example 3 |
|---|---|---|---|
| 20 | 90-92 | 93-97 | 96 |
| 80 | 88 | 90 | 93 |
| 130 | <30 | 86 | 91 |
| 160 | - | 70 | 90 |

As the thermal data show the hardness of the polyurethane-polymer decreases quickly during the heating. Over the temperature 130 °C the material is mold, in spite of the hardness of the material obtained present invention increased slightly.

## Claims

1. Polysiloxane compound with a general formula (II), which contains polysiloxanes and polyurethane bonds in the chain and has diisocyananto end groups
OCN-Z-NH-CO-O-X-O-CO-(NH-Z-NH-CO-O-X-O-)ₘ-CO-NH-Z-NCO (II)
wherein X is the molecular fragment containing the siloxane chain, Z is the molecular fragment containing the alkyl moiety, m is an integer between 1 and 20.

2. Polysiloxane compound with a general formula (IV), which contains polyurethane bonds in the chain and diisocyanate end groups;
OCN-X-NH-CO-O-Z-O-CO-(NH-X-NH-CO-O-Z-O-)ₘ-CO-NH-X-NCO (IV)
- wherein X is the molecular fragment containing the siloxane fragment, Z is the molecular fragment containing the alkyl moiety, m is an integer between 1 and 20.

3. New type heat-resistant silicone-polyurethane, which contains polysiloxane chain units of the general formula (II) with diisocyanato end groups and with polyurethane bonds in the chain
-OCN-Z-NH-CO-O-X-O-CO-(NH-Z-NH-CO-O-X-O-)ₘ-CO-NH-Z-NCO- (II)
- wherein X is the molecular fragment containing the siloxane chain, Z is the molecular fragment containing the alkyl chain, m is an integer between 1 and 20 - and/or polysiloxane chain units of the general formula (IV) with diisocyanato end groups and with polyurethane bonds in the chain
-OCN-X-NH-CO-O-Z-O-CO-(NH-X-NH-CO-O-Z-O-)ₘ-CO-NH-X-NCO- (IV)
- wherein X is the molecular fragment containing the siloxane chain, Z is the molecular fragment containing the alkyl chain, m is an integer between 1 and 20 - as crossed-linked polymer units.

4. A process for the synthesis of silicone-polyurethane according to claim 3, ***characterized by*** reacting a precursor of the general formula (I)
HO-(CQZ)n -(SiR₂O)ₘ-(CQZ)ₚ-OH (I)
- wherein n= 1....20, m= 1...20, p= 1...20; R =substituted and/or unsubstituted alkyl, aryl or aralkyl group, Q= H, substituted and/or unsubstituted alkyl, aryl or aralkyl group, Z = H, substituted and/or unsubstituted alkyl, aryl or aralkyl group -
with an alkyl and/or aryl diisocyanate and/or with an aralkyl diisocyanate, preferably in an n : n+1 ratio, followed by polymerisation of the synthesized precursor itself and/or mixed with diisocyanate compounds containing either a polyether and/or a polyesther chain, in different ratio, preferably in 20-80 w/w %.

5. The process according to claim 4, ***characterized by*** cross-linking the olygomers containing diisocyanato end groups with secondary and/or tertiary amines, preferably either with bis-amino-phenyl methane and/or bis-aminophenyl-silane containing substituted and/or unsubstituted aromatic ring.

6. Processes according to claims 4-6, ***characterized by*** carrying out the cross-linking at high temperature, preferably in a temperature range of 70-160 °C.
